# EUROPEAN PATENT SPECIFICATION

(11) **EP 2 603 019 B1**
(45) Date of publication and mention of the grant of the patent: **21.03.2018**
(21) Application number: 11191936.1
(22) Date of filing: 05.12.2011
(51) Int. Cl.: H04W 4/00, H04W 4/20, H04M 1/725

(54) **Mobile wireless communications device providing guide direction indicator for near field communication (NFC) initiation and related methods**
Mobile drahtlose Kommunikationsvorrichtung mit Führungsrichtungsanzeigebereitstellung zur Nahfeldkommunikationseinleitung und zugehörige Verfahren
Dispositif de communication mobile sans fil fournissant un indicateur de direction de guide pour l'initiation de communications de champ proche et procédés correspondants

(43) Date of publication of application: 12.06.2013
(73) Proprietor: BlackBerry Limited, Waterloo, ON N2K 0A7 (CA)
(72) Inventor: Walker, David Ryan, Waterloo, Ontario N2L 3W8 (CA); Pasquero, Jerome, Waterloo, Ontario N2L 3W8 (CA)
(74) Representative: Hibbert, Juliet Jane Grace

(56) References cited:
- US-A1- 2008 093 447
- US-A1- 2008 194 298
- US-A1- 2009 287 587
- US-A1- 2011 169 947

## Description

### Technical Field

This application relates to the field of communications, and more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

US patent application publication no 2008/0093447 discloses a portable electronic device that includes an antenna and at least one of a transmitter or a receiver connected to the antenna for transferring information between the portable electronic device and a corresponding device via the antenna. The corresponding device includes a visual indicator indicative of a location of an antenna of the corresponding device. The portable electronic device further includes an imaging device for obtaining an image of the visual indicator, an image analyzer for determining a location of the portable electronic device antenna relative to that of the corresponding device based on the image, a direction analyzer for determining a movement direction of the portable electronic device that would reduce an alignment offset between the antennas, and a directional indicator for indicating the movement direction to a user of the portable electronic device.

US patent application publication no 2011/0169947 relates to acquiring information regarding a target object using an imaging device of a handheld mobile device.

US patent application publication no 2008/0194298 discloses a system and method for enabling user interface elements to be displayed on a display device. The technology includes a method for enabling user interface elements to be displayed on a display device. The method includes accessing location information corresponding to a first short range wireless device coupled with the display device wherein the location information identifies the location of the first short range wireless device with respect to a viewing surface of the display device. The method also includes enabling a first contactless user interface icon to be displayed on the viewing surface of the display device wherein the contactless user interface icon is displayed on the viewing surface proximate the location of the first short range wireless device.

US patent application publication no 2009/0287587 is directed to methods for providing augmented shopping information to a user of a mobile terminal in a store which include providing a shopping list identifying a plurality of items and obtaining information regarding physical locations of respective ones of the items in the store. The location of the mobile terminal in the store is established. An image of a view from the location is obtained. An item having an associated location in the obtained image is identified based on the obtained information regarding physical locations. A position within the image corresponding to the respective physical location of the identified item is determined. A graphic indication of the identified item is added to the obtained image at the determined position within the image to provide an augmented image of the view that is displayed to the user on a display of the mobile terminal.

### Brief Description of the Drawings

FIG. 1 is a schematic block diagram of a communications system in accordance with one example aspect.
FIG. 2 is a front view of an example implementation of the system of FIG. 1 with a second NFC device within the field of view of a mobile wireless communications device.
FIG. 3 is a front view of an example implementation of the system of FIG. 2 when the second NFC device falls outside of the field of view of the mobile wireless communications device.
FIG. 4 is a front view of an alternative embodiment of the system of FIG. 2 in which the second NFC device has viewable dimension indicia thereon so that the mobile wireless communications device may determine a range to the second NFC device.
FIG. 5 is a flow diagram illustrating method aspects associated with the embodiments of FIGS. 1-4.
FIG. 6 is a schematic block diagram illustrating example mobile wireless communications device components that may be used with the mobile devices of FIGS. 1-4.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a communications system is provided herein which may include a mobile wireless communications device comprising a display, an optical sensor having a field of view, a movement sensor, a first near-field communication (NFC) device, and a controller. The controller may be coupled with the display, the optical sensor, the movement sensor and the first NFC device. The controller may be capable of displaying the field of view of the optical sensor on the display, locating a second NFC device within the field of view, and display at least one indicator on the display to indicate a direction of movement to align the first NFC device with the second NFC device for NFC communication with the second NFC device. When the second NFC device is outside the field of view, the controller may be configured to display the at least one direction indicator on the display to relocate the second NFC device within the field of view based upon the movement sensor. The controller may also cause the first NFC device to communicate with the second NFC device based upon proximity to the second NFC device. As such, guidance may advantageously be provided to move the first NFC device and second NFC into NFC communication range even when the second NFC device falls out of the field of view.

More particularly, the controller may be further capable of displaying a video of the field of view on the display based upon the field of view of the optical sensor, and overlaying the at least one guide direction indicator over the video on the display. In addition, the controller may be further capable of capturing an image of the field of view of the optical sensor, displaying the image of the field of view on the display, and overlaying the at least one direction indicator over the image on the display. Moreover, the controller may be furthe0072 capable of panning or zooming the image of the field of view on the display.

In one example embodiment, the at least one indicator may comprise a lateral alignment indicator with respect to the second NFC device. In accordance with another example, the at least one indicator may comprise a range indicator with respect to the second NFC device. In some examples, the second NFC device may have viewable dimension indicia thereon, and the controller may determine the range indicator based upon the viewable dimension indicia within the viewable field of the optical sensor. By way of example, the movement sensor may comprise an accelerometer, a gyroscope, etc.

A related communications system including a mobile wireless communications device and second NFC device, such as those described briefly above, is also provided. Moreover, a related method on a mobile wireless communications device, such as the one described briefly above, may include displaying the field of view of the optical sensor on the display, locating a second NFC device within the field of view, and displaying at least one indicator on the display to indicate a direction of movement to align the first NFC device with the second NFC device for NFC communication with the second NFC device. When the second NFC device is outside the field of view, the method may further include displaying the at least one indicator on the display to relocate the second NFC device within the field of view based upon the movement sensor. The method may also include causing the first NFC device to communicate with the second NFC device based upon proximity to the second NFC device.

A computer-readable medium for a mobile wireless communications device, such as the one discussed briefly above, is also provided. The computer-readable medium may have computer-executable instructions for causing the mobile wireless communications device to perform steps including displaying the field of view of the optical sensor on the display, locating a second NFC device within the field of view, and displaying at least one indicator on the display to indicate a direction of movement to align the first NFC device with the second NFC device for NFC communication with the second NFC device. When the second NFC device is outside the field of view, the at least one indicator may be displayed on the display to relocate the second NFC device within the field of view based upon the movement sensor. Furthermore, the first NFC device may be caused to communicate with the second NFC device based upon proximity to the second NFC device.

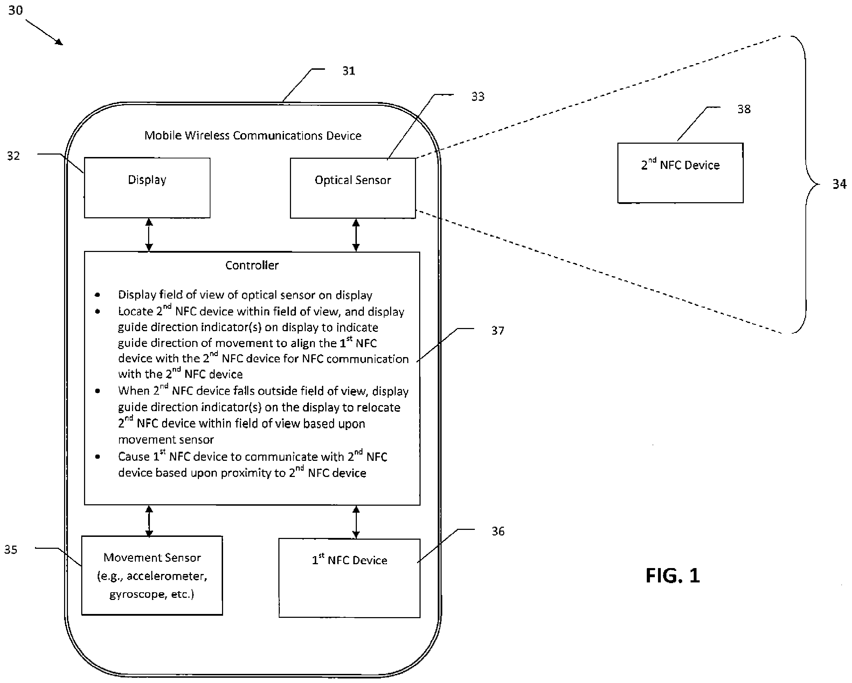

Referring initially to FIG. 1, a communications system **30** illustratively includes a mobile wireless communications device **31** (also referred to as a "mobile device" herein). Example mobile devices **31** may include portable or personal media players (e.g., music or MP3 players, video players, etc.), portable gaming devices, portable or mobile telephones, smartphones, tablet computers, digital cameras, etc.

The mobile device **31** further illustratively includes a display **32,** an optical sensor **33** having a field of view **34,** a movement sensor **35,** a first near-field communication (NFC) device **36,** and a controller **37** coupled with the display **32,** the optical sensor **33,** the movement sensor **35** and the first NFC device **36.** By way of example, the display **32** may comprise an LCD display, although other suitable display types (e.g., LED, etc.) may also be used. The display **32** may be configured as a touch screen input device in some embodiments, for example. The optical sensor **33** may comprise a charge-coupled device (CCD), for example, such as for a digital camera. Example movement sensors **35** may comprise an accelerometer or gyroscope, or a combination thereof in some embodiments.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used.

The system **30** further illustratively includes a second NFC device **38.** By way of example, the second NFC device **38** may be implemented as a passive NFC device or "tag" that is powered by a field generated by the first NFC device **36,** which functions as an active NFC device. However, it should be noted that the first NFC device **36** may be passive in some embodiments, and the second NFC device **38** may be an active NFC device in some embodiments.

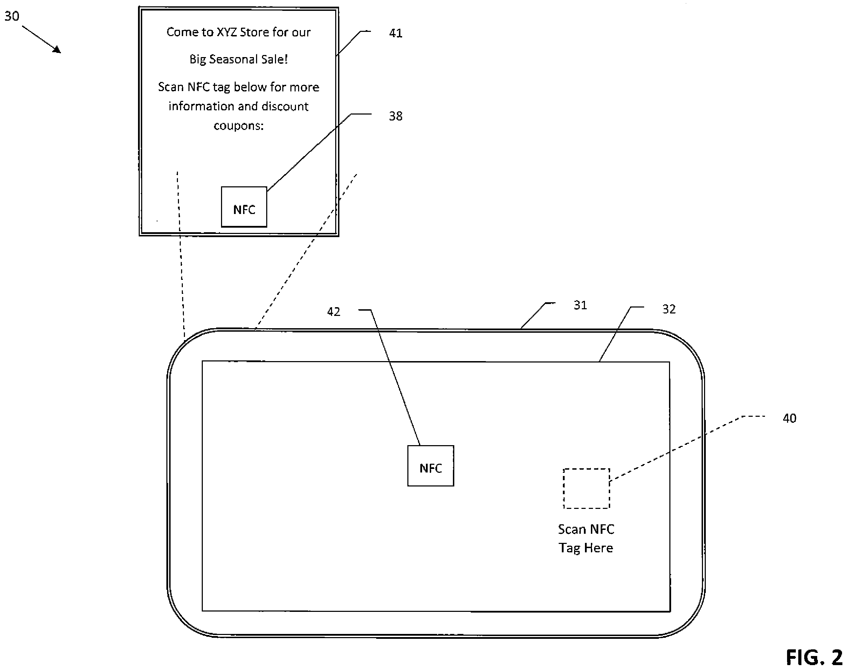

Referring additionally to FIGS. 2-5, beginning at Block **50,** the controller **37** may be configured to display the field of view **34** of the optical sensor **33** on the display **32,** at Block **51.** By way of example, this may be done responsive to a menu selection by the user (e.g., selecting a digital camera mode, NFC tag location mode, etc.), or via an input device such as a dedicated hot key or other button for launching a camera viewer on the display. Typically, when in a camera mode a video of the field of view **34** is provided on the display **32.**

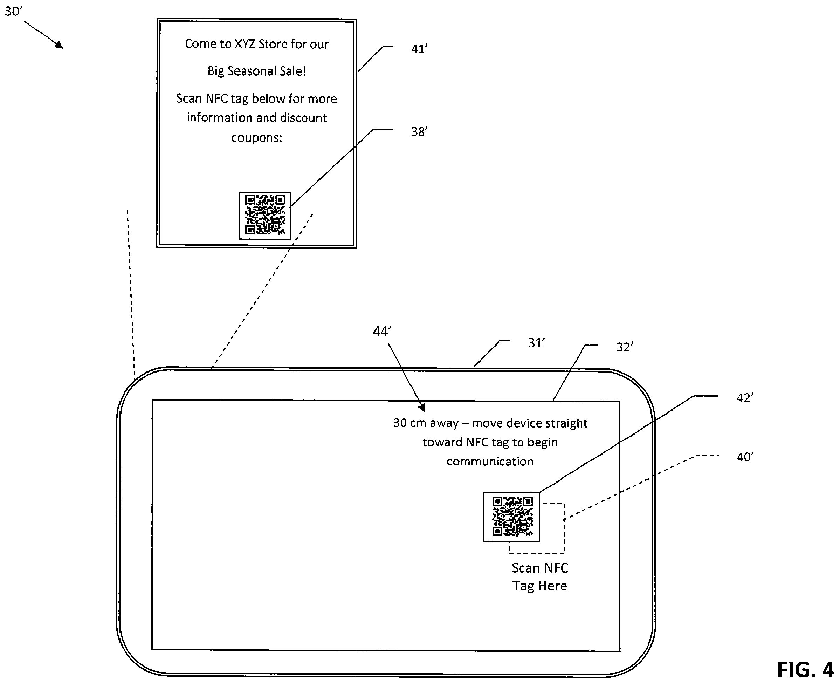

When the optical sensor **33** is directed or pointed at the second NFC device **38,** the controller **37** may advantageously locate the second NFC device **38** within the field of view **34,** at Block **52.** By way of example, this may be done based upon a known shape or configuration of the second NFC device **38,** or based upon identifying indicia on the second NFC device **38.** In the example of FIGS. 2-3, the second NFC device **38** has as its identifying indicia the abbreviation "NFC", which may be identified through image or character recognition by the controller **37** to identify the second NFC device **38** as an NFC-enabled device with which NFC communication is desired. In the example of FIG. 4, a QR code is associated with the second NFC device **38'**, which may not only provide an indication that the second NFC device **38'** is NFC-enabled (via a QR code reading application, for example), but it may also provide additional information to the controller **37,** as will be discussed further below.

As NFC technology becomes more widespread, it is being implemented not only in smartphones and smart cards, but also in larger mobile devices, such as tablet computers. The active region of an NFC antenna tends to be localized to a relatively small region of a given mobile device, particularly with respect to larger mobile devices such as tablet computers. As a result, if the first NFC device **36** is positioned adjacent the back side of the mobile **31** in such an implementation, a user may have difficulty aligning the first NFC device **36** with the second NFC device **38,** which may be blocked from the user's field of view by the mobile device (i.e., the second NFC device becomes "hidden" behind the mobile device while the user is looking at the display **32**).

The controller **37** may advantageously be configured to display one or more guide direction indicators **40** on the display **32** to indicate a guide direction of movement to align the first NFC device **36** with the second NFC device **38** for NFC communication with the second NFC device **38,** at Block **53.** In the example of FIG. 2, the second NFC device **38** is located on a sign **41** advertising a sale for XYZ Store. However, the second NFC device **38** need not be positioned on a sign in all embodiments (e.g., it may be co-located with some other type of background or it may stand alone). The direction indicator **40** in this example is a dashed box or rectangle having approximately the same shape as the second NFC device **38** (or as indicia in front of the second NFC device) on the sign **41.** However, other indicators besides an outline of the second NFC device **38** may be used in different embodiments (e.g., a bulls eye target, etc.). Moreover, the controller **37** causes the dashed box to appear at a location on the display **32** that coincides with the location of the first NFC device **36** within the mobile device **31** (or on the housing of the mobile device in some embodiments). Thus, as a visual representation **42** of the second NFC device **38** is provided on the display **42** (because it is in the field of view **34** of the optical sensor **33**), the controller **37** causes the direction indicator (i.e., the dashed box) to be overlaid or superimposed (i.e., placed in the foreground) on the displayed field of view so that a user is able to tell which way to move the mobile device **31** to align the first NFC device **36** and the second NFC device **38.**

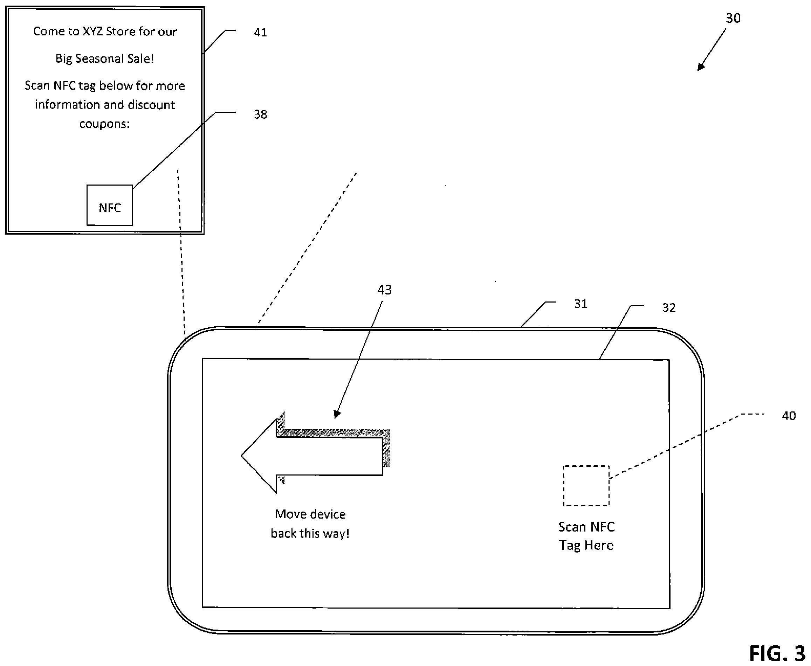

Another potential difficulty in guiding the direction of movement of the mobile device **31** so that the first NFC device **36** is aligned with the second NFC device **38** is that in some instances the second NFC device **38** may initially be within the field of view **34** but the mobile device **31** may be moved in such a way that the second NFC device **38** falls outside (i.e., is no longer within) the field of view **34** of the optical sensor **33** (Block **54**). In particular, one way in which this may occur is that the mobile device **31** is accidentally moved in a wrong direction so that the first NFC device **36** and the second NFC device **38** are farther away from being aligned with one another. This is the case illustrated in the example of FIG. 3, in which the second NFC device **38** is no longer within the field of view **34** of the optical sensor **33.** Here, the controller **37** advantageously displays another guide direction indicator **43** on the display **32** (Block **55**) including an arrow indicating the direction back toward the second NFC device **38,** and text instructions to "Move device back this way!" (i.e., the way in which the arrow is pointing). That is, the guide direction indicator **43** advantageously helps with relocating the second NFC device **38** within the field of view **34** of the optical sensor **33.**

It should be noted that, while both of the guide direction indicators **40** and **43** are used in the illustrated example, in some embodiments a single guide direction indicator (or more than two indicators) may instead be used. For example, the guide direction indicator **40** could instead have been changed from the dashed box to an arrow, and then back to the dashed box once the second NFC device **38** is back within the field of view **34,** for example. In any event, the controller **37** may advantageously utilize movement information collected from the movement sensor **35** to provide one or more guide direction indicators to help re-acquire the second NFC device **38** within the field of view **34** of the optical sensor **33.** Once reacquisition has occurred, the guide direction indicator **43** may be removed from the display.

In some embodiments, one type of indicator (e.g. guide direction indicator **43**) may be used for indicating coarse movements when the first NFC device **36** and the second NFC device **38** are relatively far from each other and another type of indicator (e.g., guide direction indicator **40**) may be used for indicating fine movements when the first NFC device **36** and the second NFC device **38** are relatively near each other.

Another way in which the second NFC device **38** may fall outside the field of view **34** of the optical sensor **33** is when the field of view is not wide enough to "see" the second NFC device as it comes close enough for the first NFC device **38** to begin NFC communication with the second NFC device **38.** That is, as noted above, the effective communications range for NFC communications may be on the order of just a few centimeters in certain implementations. However, the optical sensor **33** and the first NFC device **36** may be spaced relatively far apart on some mobile device **31** configurations. For example, the first NFC device **36** may be carried adjacent a bottom of the mobile device **31,** while the optical sensor **33** may be adjacent a top of the mobile device **31.** For a larger mobile device such as a tablet computer, this separation may be large enough that when the mobile device **31** is moved within a few centimeters of the display **41** with the first NFC device **36** and the second NFC device **38** aligned, the second NFC device **38** will fall outside of the field of view **34.** The first NFC device **36** may be physically separated from the optical sensor **33** because the optical sensor **33** may be located on a main circuit board of the mobile device **31,** but for interference purposes it is often desirable to isolate the first NFC device **36** and its associated antenna from the main circuit board, for example.

In such case, a video capture of the field of view **34** would no longer show the second NFC device **38,** even if it is aligned with the first NFC device **36.** Accordingly, the controller **37** may also advantageously be configured to cooperate with the optical sensor **33** to capture a still image of the second NFC device **38** and the surrounding area, which may be displayed on the display **32** instead of a "live" video capture from the optical sensor **33.** By way of example, when the optical sensor **33** is first activated to begin image capture, the controller **37** may cause the still image to be taken. Then, when the second NFC sensor **38** is no longer within the field of view **34,** the controller **37** may then cause the still image to be displayed on the display **32,** and may pan or zoom the still image as appropriate to help guide the first NFC second **36** and the second NFC sensor **38** into alignment, with the assistance of the guide direction indicator **40** or **43.** This may advantageously help provide a visual frame of reference as to the location of the second NFC device **38,** and whether it is in alignment with the first NFC device **36,** i.e., since the second NFC device may still be shown in the still image.

Generally speaking, the better the resolution of the still image captured, the better the features of the still image will look as they are panned or zoomed on the display **32,** although various resolutions may be used in different embodiments. Moreover, in some embodiments multiple still images may be captured and stored, such as at different range distances from the second NFC device **38.** Thus, an image taken at a relatively close distance with respect to the second NFC device **38** may be used when the second NFC device **38** falls out of the field of view **34** because the mobile device **31** is too close to the second NFC device **38.** On the other hand, a still image captured while the mobile device **31** is relatively far away may be used when the second NFC device **38** falls out of the field of view **34** when the mobile device **31** is still not close to the second NFC device **38** (e.g., farther away than 20 cm or so). The controller **37** may be automatically configured to capture the different still images as the mobile device **31** is moved around, although still images could be captured manually based upon an input device (e.g., designated camera or picture button, etc.) in some instances.

In the above-described embodiments, the guide direction indicators **40** and **43** may be considered as lateral alignment indicators in that they are intended to guide a user to move the mobile device **31** left, right, up or down with respect to the second NFC device **28.** However, in some implementations the controller **37** may also advantageously be configured to provide a range alignment indicator (i.e., to provide an indication whether the mobile device **31** should be moved closer (i.e., toward) or farther (i.e., away from) the second NFC device **38**). In the example of FIG. **4****,** a QR code is associated with the second NFC device **38'**, and the QR code may advantageously provide information regarding dimensions of the second NFC device (e.g., it is 2 cm x 2 cm, etc.) to the controller **37'** via a QR reader application. Upon knowing the dimensions of the second NFC device **38'** (or the visual indicia associated with the second NFC device in embodiments where the second NFC device is embedded within or behind the sign **41'**, etc.), the controller **37'** may advantageously determine a range to the second NFC device when in the field of view **34'**.

In the illustrated example, the visual representation **42'** of the second NFC device **38'** is at least partially laterally aligned with the guide direction indicator **40',** meaning that the first NFC device **36'** and the second NFC device **38'** are sufficiently laterally aligned for NFC communication. However, the mobile device **31'** is still too far away from the display **41'** for the first NFC device **36'** and the second NFC device **38'** to begin NFC communication (i.e., they are outside of the effective NFC communication range). The controller **37'** discerns this range information from the QR code associated with the second NFC device **38'**, as noted above, and advantageously provides a range indicator **44'** to advise the user that the mobile device **31'** needs to be moved inward toward the sign **41'** (or outwardly away from the sign, if appropriate).

In the present example, the range indicator **44'** comprises a text message indicating that the second NFC device **38'** is still 30 cm away, and that the mobile device **31'** should be moved straight toward the "NFC tag" to begin NFC communication. Other suitable range indicators may also be used, such as a straightforward indication to move the mobile device **31'** in or out, or a more detailed indication such as a slider or sliding scale to visually represent how far away the second NFC device **38'** is, a countdown indicator that changes as the range changes, etc. Moreover, in some implementations different symbols (e.g., inward or outward pointing arrows, etc.) may be used to indicate which direction the mobile device **31'** should be moved for ranging purposes when aligning the first NFC device **36'** and the second NFC device **38'** for NFC communication.

It should be noted that other approaches besides QR codes may also be used for determining ranging information from the mobile device **31'** to the second NFC device **38'.** For example, in some implementations multiple optical sensors **33'** may be provided, with which the controller **37'** may cooperate to determine a range to the second NFC device **38'.** In accordance with another example, if the second NFC device **38'** is associated with another wireless transmitter (e.g., a WLAN transmitted, etc.), a signal strength from the other transmitter may provide an indication of range. Also, other suitable symbols besides QR codes (e.g., barcodes, etc.) may also be used.

One particular advantage of the range finding implementation described above is that this may advantageously provide for battery power savings. That is, in the case where the first NFC device **36'** is an "active" device, it may be turned off or placed in a low power operating mode (e.g., a lower scan rate) until it is determined that the second NFC device **38'** is within a designated range (e.g., within 20 cm, etc.) to advantageously reduce power consumption by the first NFC device **36'.** The first NFC device **36'** may be switched on or to a higher scan rate mode (which consumes more power) once it is determined through range finding that NFC communication is imminent, and may conversely be placed back in the power saving mode once NFC communications have been completed.

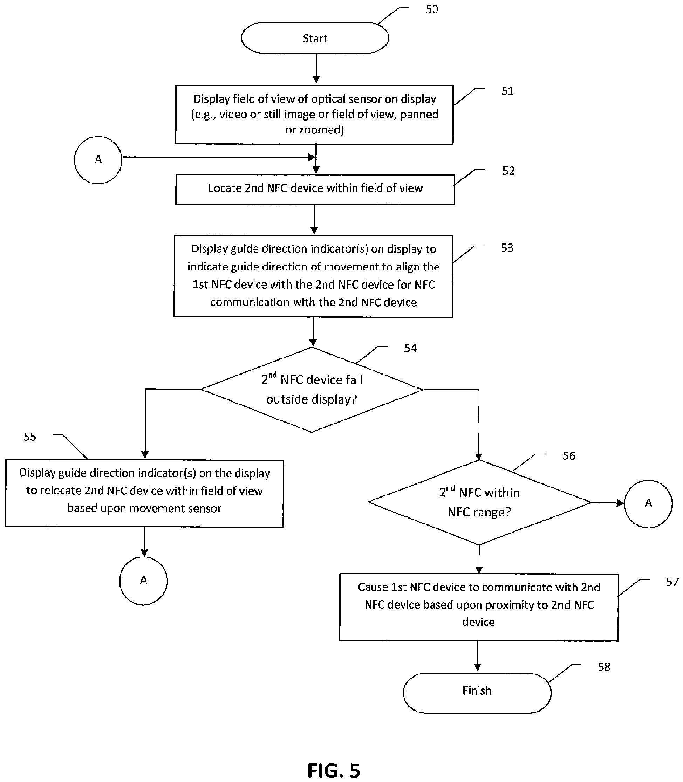

Once the first NFC device **36** and the second NFC device **38** are within range of one another, they will discover one another based upon their proximity and begin NFC communication in accordance with the appropriate NFC protocol being used (e.g., A, B, F, etc.), at Blocks **56-57,** which concludes the method illustrated in FIG. 5 (Block **58**). However, if the first NFC device **36** and the second NFC device **38** were moved apart before completion of an NFC communication, the above-described process may be automatically initiated again by the controller **37** to once again guide re-alignment so that the communication may be completed, for example.

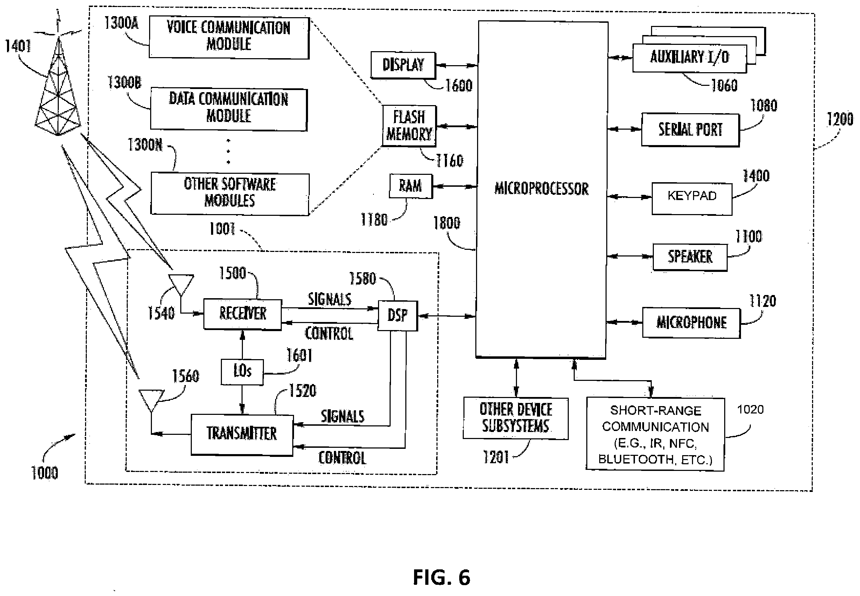

Example components of a mobile wireless communications device **1000** that may be used in accordance with the above-described embodiments are further described below with reference to FIG. 6. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device 1000 may have the capability to communicate with other computer systems via the Internet. Other example input devices may include optical sensors or movement sensors, such as accelerometers or gyroscopes, for example.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device comprising:
a display (32);
an optical sensor (33) having a lateral field of view (34);
a movement sensor (35);
a first near-field communication "NFC" device (36); and
a controller (37) coupled with said display, said optical sensor, said movement sensor and said first NFC device, said controller being capable of
displaying a video of the field of view of said optical sensor on said display,
locating and identifying a second NFC device (38) within the video of the field of view, capturing a still image of the second NFC device, and displaying a range indicator (44) on the display (32) to indicate a range distance to the second NFC device, wherein the identifying of the second NFC device is based on detecting at least one of identifying indicia on the second NFC device or a shape of the second NFC device ,
when said second NFC device is outside the field of view, displaying the still image of the second NFC device on the display, determining a lateral alignment indicator (43) based upon the movement sensor and displaying the lateral alignment indicator (43) on said display to facilitate relocation of said second NFC device within the field of view, and
when said second NFC device is within the field of view, displaying a guide indicator (40) on the display to relocate the second NFC device aligned with the guide indicator (40) based upon the movement sensor; and
causing said first NFC device to communicate with said second NFC device based upon proximity to and alignment with the identifying indicia of said second NFC device.

2. The mobile wireless communications device of Claim 1 wherein said controller is further capable of overlaying the range indicator (44) and the lateral alignment indicator (43) over the video of the field of view on said display.

3. The mobile wireless communications device of Claim 1 wherein said controller is further capable of overlaying the range indicator (44) and the lateral alignment indicator (43) over the still image of the second NFC device on said display.

4. The mobile wireless communications device of Claim 3 wherein said controller is further capable of panning the still image of the field of view on said display.

5. The mobile wireless communications device of Claim 3 wherein said controller is further capable of zooming the still image of the second NFC device on said display.

6. The mobile wireless communications device of Claim 1 wherein the second NFC device has viewable dimension indicia (42') thereon; and wherein said controller generates the range indicator based upon the viewable dimension indicia within the field of the optical sensor.

7. The mobile wireless communications device of Claim 1 wherein said movement sensor comprises an accelerometer.

8. The mobile wireless communications device of Claim 1 wherein said movement sensor comprises a gyroscope.

9. A method on a mobile wireless communications device (31) comprising a display (32), an optical sensor (33) having a field of view (34), a movement sensor (35), and a first near-field communication (NFC) device (36), the method comprising:
displaying a video of the field of view of the optical sensor on the display;
locating and identifying a second NFC device (38) within the video of the field of view, capturing a still image of the second NFC device, and displaying a range indicator (44) on the display to indicate a range distance to the second NFC device to initiate NFC communication with the second NFC device, wherein the identifying of the second NFC device is based on detecting at least one of identifying indicia on the second NFC device or a shape of the second NFC device;
when the second NFC device is outside the field of view, displaying the still image of the second NFC device, determining a lateral alignment indicator (43) based upon the movement sensor, and displaying the lateral alignment indicator (43) on the display to facilitate relocation of the second NFC device to a position within the field of view;
when the second NFC device is inside the field of view, displaying a guide indicator (40) on the display to relocate the second NFC device aligned with the guide indicator (40) based upon the movement sensor; and
causing the first NFC device to communicate with the second NFC device based upon proximity to and alignment with the second NFC device.

10. The method of Claim 9 wherein displaying of the video of the field of view further comprises overlaying the range indicator and the lateral alignment indicator over the video of the field of view on the display.

11. The method of Claim 9 further comprising overlaying the range indicator and the lateral alignment indicator over the still image of the second NFC device on the display.

12. The method of Claim 11 further comprising at least one of panning or zooming the still image of the second NFC device on the display.

## Patentansprüche

1. Mobile drahtlose Kommunikationsvorrichtung, die Folgendes umfasst:
eine Anzeige (32);
einen optischen Sensor (33) mit einem seitlichen Sichtfeld (34);
einen Bewegungssensor (35);
eine erste Nahfeldkommunikationsvorrichtung, NFC-Vorrichtung, (36); und
eine Steuereinheit (37), die an die Anzeige, den optischen Sensor, den Bewegungssensor und die erste NFC-Vorrichtung gekoppelt ist, wobei die Steuereinheit
ein Video des Sichtfelds des optischen Sensors auf der Anzeige anzeigen kann,
eine zweite NFC-Vorrichtung (38) innerhalb des Videos des Sichtfelds auffinden und identifizieren kann, ein Standbild der zweiten NFC-Vorrichtung aufnehmen kann und einen Bereichsindikator (44) auf der Anzeige (32) anzeigen kann, um einen Bereichsabstand zu der zweiten NFC-Vorrichtung anzugeben, wobei das Identifizieren der zweiten NFC-Vorrichtung auf dem Detektieren eines identifizierenden Zeichens an der zweiten NFC-Vorrichtung und/oder einer Form der zweiten NFC-Vorrichtung beruht,
dann, wenn die zweite NFC-Vorrichtung außerhalb des Sichtfelds ist, das Standbild der zweiten NFC-Vorrichtung auf der Anzeige anzeigen kann, einen seitlichen Ausrichtungsindikator (43) anhand des Bewegungssensors bestimmen kann und den seitlichen Ausrichtungsindikator (43) auf der Anzeige anzeigen kann, um einen Standortwechsel der zweiten NFC-Vorrichtung innerhalb des Sichtfelds zu erleichtern, und
dann, wenn die zweite NFC-Vorrichtung innerhalb des Sichtfelds ist, einen Führungsindikator (40) auf der Anzeige anzeigen kann, um die zweite NFC-Vorrichtung ausgerichtet auf den Führungsindikator (40) anhand des Bewegungssensors neu aufzufinden; und
anhand der Nähe zu dem identifizierenden Zeichen der zweiten NFC-Vorrichtung und der Ausrichtung auf ihn bewirken kann, dass die erste NFC-Vorrichtung mit der zweiten NFC-Vorrichtung kommuniziert.

2. Mobile drahtlose Kommunikationsvorrichtung nach Anspruch 1, wobei die Steuereinheit ferner den Bereichsindikator (44) und den seitlichen Ausrichtungsindikator (43) mit dem Video des Sichtfelds auf der Anzeige überlagern kann.

3. Mobile drahtlose Kommunikationsvorrichtung nach Anspruch 1, wobei die Steuereinheit ferner den Bereichsindikator (44) und den seitlichen Ausrichtungsindikator (43) mit dem Standbild der zweiten NFC-Vorrichtung auf der Anzeige überlagern kann.

4. Mobile drahtlose Kommunikationsvorrichtung nach Anspruch 3, wobei die Steuereinheit ferner das Standbild des Sichtfelds auf der Anzeige schwenken kann.

5. Mobile drahtlose Kommunikationsvorrichtung nach Anspruch 3, wobei die Steuereinheit ferner das Standbild der zweiten NFC-Vorrichtung auf der Anzeige zoomen kann.

6. Mobile drahtlose Kommunikationsvorrichtung nach Anspruch 1, wobei die zweite NFC-Vorrichtung ein sichtbares Größenzeichen (42') auf ihr besitzt; und wobei die Steuereinheit den Bereichsindikator anhand des sichtbaren Größenzeichens innerhalb des Felds des optischen Sensors erzeugt.

7. Mobile drahtlose Kommunikationsvorrichtung nach Anspruch 1, wobei der Bewegungssensor einen Beschleunigungsmesser umfasst.

8. Mobile drahtlose Kommunikationsvorrichtung nach Anspruch 1, wobei der Bewegungssensor ein Gyroskop umfasst.

9. Verfahren auf einer mobilen Kommunikationsvorrichtung (31), die eine Anzeige (32), einen optischen Sensor (33) mit einem Sichtfeld (34), einen Bewegungssensor (35) und eine erste Nahfeldkommunikationsvorrichtung (NFC-Vorrichtung) (36) enthält, wobei das Verfahren umfasst:
Anzeigen eines Videos des Sichtfelds des optischen Sensors auf der Anzeige;
Auffinden und Identifizieren einer zweiten NFC-Vorrichtung (38) innerhalb des Videos des Sichtfelds, Aufnehmen eines Standbilds der zweiten NFC-Vorrichtung und Anzeigen eines Bereichsindikators (44) auf der Anzeige, um einen Bereichsabstand zu der zweiten NFC-Vorrichtung anzugeben, um eine NFC-Kommunikation mit der zweiten NFC-Vorrichtung einzuleiten, wobei das Identifizieren der zweiten NFC-Vorrichtung auf dem Detektieren eines identifizierenden Zeichens auf der zweiten NFC-Vorrichtung oder einer Form der zweiten NFC-Vorrichtung beru ht;
dann, wenn die zweite NFC-Vorrichtung außerhalb des Sichtfelds ist, Anzeigen des Standbilds der zweiten NFC-Vorrichtung, Bestimmen eines seitlichen Ausrichtungsindikators (43) anhand des Bewegungssensors und Anzeigen des seitlichen Ausrichtungsindikators (43) auf der Anzeige, um einen Standortwechsel der zweiten NFC-Vorrichtung zu einer Position innerhalb des Sichtfelds zu erleichtern;
dann, wenn die zweite NFC-Vorrichtung innerhalb des Sichtfelds ist, Anzeigen eines Führungsindikators (40) auf der Anzeige, um die zweite NFC-Vorrichtung ausgerichtet auf den Führungsindikator (40) anhand des Bewegungssensors neu aufzufinden; und
Bewirken anhand der Nähe zu der zweiten NFC-Vorrichtung und der Ausrichtung auf sie, dass die erste NFC-Vorrichtung mit der zweiten NFC-Vorrichtung kommuniziert.

10. Verfahren nach Anspruch 9, wobei das Anzeigen des Videos des Sichtfelds ferner umfasst, den Bereichsindikator und den seitlichen Ausrichtungsindikator mit dem Video des Sichtfelds auf der Anzeige zu überlagern.

11. Verfahren nach Anspruch 9, das ferner umfasst, den Bereichsindikator und den seitlichen Ausrichtungsindikator mit dem Standbild der zweiten NFC-Vorrichtung auf der Anzeige zu überlagern.

12. Verfahren nach Anspruch 11, das ferner umfasst, das Standbild der zweiten NFC-Vorrichtung auf der Anzeige zu schwenken und/oder zu zoomen.

## Revendications

1. Dispositif de communication sans fil mobile comprenant :
une unité d'affichage (32) ;
un capteur optique (33) ayant un champ de vision latéral (34) ;
un capteur de mouvement (35) ;
un premier dispositif de communication en champ proche "NFC" (36) ; et
un dispositif de commande (37) couplé à ladite unité d'affichage, audit capteur optique, audit capteur de mouvement et audit premier dispositif NFC, ledit dispositif de commande étant capable :
d'afficher une vidéo du champ de vision dudit capteur optique sur ladite unité d'affichage,
de localiser et d'identifier un deuxième dispositif NFC (38) dans la vidéo du champ de vision, de capturer une image fixe du deuxième dispositif NFC, et d'afficher un indicateur de portée (44) sur l'unité d'affichage (32) afin d'indiquer une distance de portée au deuxième dispositif NFC, dans lequel l'identification du deuxième dispositif NFC est basée sur la détection des indices d'identification sur le deuxième dispositif NFC et/ou d'une forme du deuxième dispositif NFC,
lorsque ledit deuxième dispositif NFC se trouve en dehors du champ de vision, d'afficher l'image fixe du deuxième dispositif NFC sur l'unité d'affichage,
de déterminer un indicateur d'alignement latéral (43) sur la base du capteur de mouvement et d'afficher l'indicateur d'alignement latéral (43) sur ladite unité d'affichage pour faciliter la relocalisation dudit deuxième dispositif NFC dans le champ de vision, et
lorsque ledit deuxième dispositif NFC se trouve dans le champ de vision, d'afficher un indicateur de guidage (40) sur l'unité d'affichage pour relocaliser le deuxième dispositif NFC aligné avec l'indicateur de guidage (40) sur la base du capteur de mouvement ; et
d'amener ledit premier dispositif NFC à communiquer avec ledit deuxième dispositif NFC sur la base de la proximité à et de l'alignement avec les indices d'identification dudit deuxième dispositif NFC.

2. Dispositif de communication sans fil mobile de la revendication 1, dans lequel ledit dispositif de commande est en outre capable de superposer l'indicateur de portée (44) et l'indicateur d'alignement latéral (43) sur la vidéo du champ de vision sur ladite unité d'affichage.

3. Dispositif de communication sans fil mobile de la revendication 1, dans lequel ledit dispositif de commande est en outre capable de superposer l'indicateur de portée (44) et l'indicateur d'alignement latéral (43) sur l'image fixe du deuxième dispositif NFC sur ladite unité d'affichage.

4. Dispositif de communication sans fil mobile de la revendication 3, dans lequel ledit dispositif de commande est en outre capable de réaliser un panoramique de l'image fixe du champ de vision sur ladite unité d'affichage.

5. Dispositif de communication sans fil mobile de la revendication 3, dans lequel ledit dispositif de commande est en outre capable de réaliser un zoom de l'image fixe du deuxième dispositif NFC sur ladite unité d'affichage.

6. Dispositif de communication sans fil mobile de la revendication 1, dans lequel
le deuxième dispositif NFC a des indices de dimensions visibles (42') sur celui-ci ; et dans lequel ledit dispositif de commande génère l'indicateur de portée sur la base des indices de dimensions visibles dans le champ du capteur optique.

7. Dispositif de communication sans fil mobile de la revendication 1, dans lequel ledit capteur de mouvement comprend un accéléromètre.

8. Dispositif de communication sans fil mobile de la revendication 1, dans lequel ledit capteur de mouvement comprend un gyroscope.

9. Procédé sur un dispositif de communication sans fil mobile (31) comprenant une unité d'affichage (32), un capteur optique (33) ayant un champ de vision (34), un capteur de mouvement (35), et un premier dispositif de communication en champ proche (NFC) (36), le procédé comprenant le fait :
d'afficher une vidéo du champ de vision du capteur optique sur l'unité d'affichage ;
de localiser et d'identifier un deuxième dispositif NFC (38) dans la vidéo du champ de vision, de capturer une image fixe du deuxième dispositif NFC, et d'afficher un indicateur de portée (44) sur l'unité d'affichage pour indiquer une distance de portée au deuxième dispositif NFC pour initier une communication NFC avec le deuxième dispositif NFC, dans lequel l'identification du deuxième dispositif NFC est basée sur la détection des indices d'identification sur le deuxième dispositif NFC et/ou d'une forme du deuxième dispositif NFC ;
lorsque le deuxième dispositif NFC se trouve en dehors du champ de vision, d'afficher l'image fixe du deuxième dispositif NFC, de déterminer un indicateur d'alignement latéral (43) sur la base du capteur de mouvement, et d'afficher l'indicateur d'alignement latéral (43) sur l'unité d'affichage pour faciliter la relocalisation du deuxième dispositif NFC à une position dans le champ de vision ;
lorsque le deuxième dispositif NFC se trouve dans le champ de vision, d'afficher un indicateur de guidage (40) sur l'unité d'affichage pour relocaliser le deuxième dispositif NFC aligné avec l'indicateur de guidage (40) sur la base du capteur de mouvement ; et
d'amener le premier dispositif NFC à communiquer avec le deuxième dispositif NFC sur la base de la proximité à et de l'alignement avec le deuxième dispositif NFC.

10. Procédé de la revendication 9, dans lequel l'affichage de la vidéo du champ de vision comprend en outre la superposition de l'indicateur de portée et de l'indicateur d'alignement latéral sur la vidéo du champ de vision sur l'unité d'affichage.

11. Procédé de la revendication 9, comprenant en outre la superposition de l'indicateur de portée et de l'indicateur d'alignement latéral sur l'image fixe du deuxième dispositif NFC sur l'unité d'affichage.

12. Procédé de la revendication 11, comprenant en outre au moins l'une parmi la réalisation d'un panoramique ou la réalisation d'un zoom de l'image fixe du deuxième dispositif NFC sur l'unité d'affichage.
